# FASCICULE DE BREVET EUROPEEN

(11) **EP 4 443 329 B1**
(45) Date de publication et mention de la délivrance du brevet: **01.04.2026**
(21) Numéro de dépôt: 24168276.4
(22) Date de dépôt: 03.04.2024
(51) Int. Cl.: G06K 19/02, A44C 3/00, G06K 19/04, G06K 19/077, G09F 3/08, A44C 21/00

(54) **PIECE DE MONNAIE OU MEDAILLE COMPORTANT UN CERTIFICAT NUMERIQUE**
MÜNZ- ODER MEDAILLENTEIL MIT DIGITALEM ZERTIFIKAT
COIN OR MEDAL WITH DIGITAL CERTIFICATE

(30) Priorité: 07.04.2023 FR 2303488
(43) Date de publication de la demande: 09.10.2024
(73) Titulaire: La Monnaie de Paris, 75006 Paris (FR)
(72) Inventeur: RENCKER, Pascal, 75006 Paris (FR)
(74) Mandataire: Santarelli

(56) Documents cités:
- RU-C1- 2 754 036
- US-A1- 2012 055 996
- US-A1- 2014 209 691
- US-A1- 2020 067 353

## Description

### Domaine technique

La présente invention se rapporte au domaine des médailles et pièces de monnaie.

La présente invention se rapporte plus particulièrement à une médaille ou pièce de monnaie comportant un élément NFC délivrant un certificat numérique.

### Technique antérieure

Une pièce de monnaie se définit aujourd'hui comme un objet métallique, avec deux côtés portant une gravure et une tranche spécifique. Une valeur faciale gravée lui confère son pouvoir libératoire, que ce soit une monnaie de collection ou une monnaie courante. Les médailles, quant à elles, ont une composition totale ou partielle en métal, et ne présentent pas de valeur faciale, mais seulement deux gravures en face et revers, voire sur tranche. Au-delà des éléments gravés, ces deux types de produits ne délivrent aucune autre information, ni figée ni dynamique.

L'invention présentée ci-dessous introduit une notion de pièce/médaille intelligente (« Smart Coin/Smart Medal ») qui renvoie à une pièce/médaille qui a des informations diverses stockées en elle, lisibles par le biais d'un lecteur (ex. : smartphones, terminaux RFID-NFC).

Aujourd'hui, les seules technologies déjà ponctuellement utilisées pour rendre les pièces de monnaie/médailles intelligentes sont les QR Codes gravés au laser ou alors appliqués sur la pièce lors de la frappe :
- Royal Dutch Mint : world's first QR coded coin, 2011
- National Bank of Ukraine : The 30th Anniversary of Ukraine's Independence, 2021

Ce type de code d'identification, au même titre que les codes-barres, ne permet qu'une réponse unique et très limitée en termes de complexité :
- Un QR Code est une simple « clé » et est donc limité en possibilité de réponse : il ne peut renvoyer qu'un lien URL, un texte libre court, une carte de visite, un fichier (pdf, Word...), une application ou encore un courriel.
- Il est également limité en termes de quantité de réponse : il ne peut faire lien qu'avec un seul objet unique.
- De plus, la quantité d'information qu'il peut contenir est dictée par sa taille, plus il est grand, plus il peut contenir d'informations, mais au détriment de la place laissée pour une expression artistique.

La demande de brevet américain N° US 2012/055996 A1 se rapporte à une pièce de monnaie comprenant un élément de base métallique, de préférence en forme de disque, et au moins un élément d'insertion plat qui est logé dans l'élément de base métallique en forme de disque.

### Exposé de l'invention

L'invention vise à remédier aux inconvénients de l'art antérieur en proposant une solution permettant de proposer des produits métalliques du type pièce ou médaille, innovants et sécurisés avec des certificats numériques via blockchain, de créer pour chaque numéro de série d'un produit un certificat numérique d'authenticité unique lié à ce numéro de série, et d'éviter la contrefaçon, de protéger ses produits originaux, de permettre des cessions sécurisées, et d'introduire des données permettant un échange numérique complexe et dynamique avec les produits.

A cet effet, l'invention concerne un dispositif métallique, de type médaille ou pièce de monnaie, comportant un élément électronique NFC (« Near Field Communication ») de type tag logé dans une cavité, encapsulé avec de la résine et intégré dans un complexe de ferrite au sein dudit dispositif métallique, et comportant en outre une couche d'aluminium située sous le complexe de ferrite.

Selon un mode de réalisation, le complexe de ferrite possède une épaisseur 2xE, où E est compris entre 80 et 120 µm.

Selon un mode de réalisation, la couche d'aluminium possède une épaisseur comprise entre 30 et 60 µm.

Selon un mode de mise en œuvre particulier, ladite cavité possède une profondeur entre 0,60 et 0,80 mm.

Avantageusement, la résine est coulée puis cuite à une température comprise entre 65° C et 95°C pendant une durée comprise entre 45 et 75 minutes.

Selon un mode de réalisation, une ou plusieurs couches d'encre sont appliquées sur la résine.

Selon un mode de réalisation, le dispositif métallique selon la présente invention comporte un certificat numérique intégré dans ledit élément électronique NFC.

Selon un mode de réalisation, ledit certificat numérique à associé à une technologie de chaîne de blocs (blockchain).

Avantageusement, le dispositif métallique selon la présente invention est couplé à une application mobile installée sur un dispositif de type smartphone

### Brève description des dessins

[Fig. 1] La figure 1 illustre le dispositif selon l'invention, dans un mode de réalisation.
[Fig. 2A] La figure 2A représente également le dispositif selon l'invention, dans un mode de réalisation.
[Fig. 2B] La figure 2B est une coupe A-A de la figure 2A.

### Description détaillée

Les buts de la présente invention sont les suivants :
1. Proposer des produits métalliques du type pièce ou médaille, innovants et sécurisés avec des certificats numériques via blockchain,
2. Créer pour chaque numéro de série d'un produit un certificat numérique d'authenticité unique lié à ce numéro de série,
3. Eviter la contrefaçon, protéger ses produits originaux, permettre des cessions sécurisées,
4. Introduire des données permettant un échange numérique complexe et dynamique avec les produits.

Les technologies utilisées jusqu'alors permettent le traitement de ce genre de données mais de façon unique et isolée, c'est-à-dire qu'il faudrait un QR Code pour chaque information / URL / document, ce qui est techniquement infaisable vu la taille des produits, et ne présente aucun intérêt.

Les Inventeurs de la présente invention se sont donc tournés vers la technologie sans contact des tags NFC lisibles directement avec un smartphone ou un terminal spécifique.

Un tag NFC est composé à minima d'un ensemble puce électronique, antenne et support de ceux-ci.

Le système NFC (« Near Field Communication ») est un sous-ensemble de la technologie RFID dont le principe réside en la communication passive via champ magnétique (13.56 mHz). Il s'agit d'une fréquence libre dans tous les pays, qui offre un bon débit de communication. La technologie est accessible et miniaturisable. Cette communication est dite « passive » car le tag NFC ne dispose d'aucune source d'alimentation en interne. En effet, c'est le lecteur qui apporte l'énergie nécessaire (via le champ magnétique) au tag pour l'alimenter et permettre le partage des informations qu'il comporte dans sa puce.

La communication se fait via ce champ et permet l'échange d'informations à courte distance (< 10 cm) entre le lecteur (smartphone ou lecteur spécifique) et le tag NFC (carte de crédit par exemple).

Il existe sur le marché de nombreuses références de tags NFC avec des tailles, formes et supports différents mais aucune qui ne réponde aux objectifs de la présente invention :
- Le premier défi technique réside en sa miniaturisation. En effet, en raison des exigences esthétiques finales et des techniques de frappe maîtrisées, il était souhaitable de disposer d'un tag NFC, le plus petit possible (diamètre inférieur à 10 ou 12 mm) et le plus fin possible (inférieur à 1mm).
- Le second défi était de faire fonctionner et de rendre lisible ce tag NFC dans un objet métallique (tel qu'une pièce de monnaie ou une médaille). En effet, le métal est conducteur et en présence d'un champ magnétique, on constate la création de courants de Foucault (dus à la variation du champ qui l'entoure). En résultent des interférences destructrices qui réduisent considérablement la sensibilité et l'efficacité de l'antenne NFC, jusqu'à rendre la communication entre le tag et le lecteur impossible. Plus il y aura de quantité du métal autour de Tag, plus il y aura d'interférences qui perturberont les performances de Tag, induisant une dégradation importante du signal et une réduction de la distance de lecture, voire un fonctionnement impossible.

L'invention consiste en :
- La création d'un tag NFC miniature et sur mesure, de très faible épaisseur, spécifiquement développé par le Demandeur pour permettre son fonctionnement dans un environnement métallique important comme une pièce de monnaie ou une médaille. Le tag NFC ainsi créé est isolé par un complexe multicouche métallique spécifique contenant principalement des éléments en ferrite et aluminium, conçu pour neutraliser en grande partie les courants de Foucault dans la pièce métallique, qui causent la dégradation des performances de l'antenne du tag.
- L'insertion en profondeur du tag dans une cavité du produit, puis l'encapsulation inviolable du tag par un procédé de résinage et de tampographie. Cette étape permet la sécurisation contre l'arrachement et la falsification.
- L'élaboration de données complexes sécurisées et anti-contrefaçon via la blockchain, liés de manière unique au produit physique (certificat d'authenticité et numérotation, certificats de propriété, contenu spécialement conçu pour chacun des projets liés...) très facilement lisibles avec un smartphone équipé de la technologie NFC

La présente invention se rapporte plus particulièrement à un dispositif 100 métallique, de type médaille ou pièce de monnaie, comportant un élément 110 NFC (*« Near Field Communication »*) de type tag logé dans une cavité, encapsulé avec de la résine et intégré dans un complexe 120 de ferrite au sein dudit dispositif 100 métallique, et comportant en outre une couche 130 d'aluminium située sous le complexe 120 de ferrite.

Dans un mode de réalisation, le complexe 120 de ferrite possède une épaisseur de 2xE, où E est compris entre 80 et 120 µm.

Dans un mode de réalisation la couche 130 d'aluminium possède une épaisseur comprise entre 30 et 60 µm.

Dans un mode de réalisation, ladite cavité possède une profondeur entre 0,60 et 0,80 mm.

Dans un mode de réalisation, la résine est coulée puis cuite à une température comprise entre 65° C et 95°C pendant une durée comprise entre 45 et 75 minutes.

Dans un mode de mise en œuvre particulier, une ou plusieurs couches d'encre sont appliquées sur la résine.

Dans un mode de réalisation, ledit dispositif 100 métallique comporte un certificat numérique intégré dans ledit élément 110 NFC.

Dans un mode de réalisation, ledit certificat numérique à associé à une technologie de chaîne de blocs (blockchain).

Dans un mode de mise en œuvre particulier, ledit dispositif 100 métallique est couplé à une application mobile installée sur un dispositif de type smartphone.

La composition métallique des produits du Demandeur (or, argent, platine, palladium, bronzes et alliages cuivreux notamment), comme évoqué précédemment, génèrent des interférences qui dégradent l'efficacité du tag NFC. En effet, sans protection particulière, la présence de la masse métallique environnante autour de la cavité dans laquelle le tag est inséré rend celui-ci inerte. De plus, de manière générale, lorsque cette masse augmente, comme dans le cas d'un produit de forte taille, la performance s'altère, la distance de réponse diminue, jusqu'à disparaitre complètement avec une absence de fonctionnement.

Afin d'isoler le plus possible la partie fonctionnelle du tag des interférences, il a été mis au point un complexe sandwich d'une épaisseur de 2xE de ferrite, où E est compris entre 80 et 120 µm, très précisément de la taille du tag, et qui fournit très localement une grande perméabilité magnétique. De cette façon, les lignes de champ seront plus concentrées localement dans ce complexe, ce qui minimise l'influence du métal. Second avantage de ce complexe, il augmente l'efficacité des antennes pour les tags de petite taille et de faible épaisseur, comme celles de l'invention. Cependant, le résultat obtenu n'a pas été pleinement satisfaisant.

Une seconde amélioration a été appliquée afin de s'affranchir de l'impact de l'épaisseur de métal dans lequel se trouve le tag : l'ajout d'une couche d'aluminium d'épaisseur comprise entre 30 et 60 µm sous la couche de ferrite. Cette couche permet d'abaisser la fréquence de résonance et de se rapprocher plus de la fréquence idéale 13.56 Mhz, améliorant ainsi l'aptitude à la lecture à une distance restant faible.

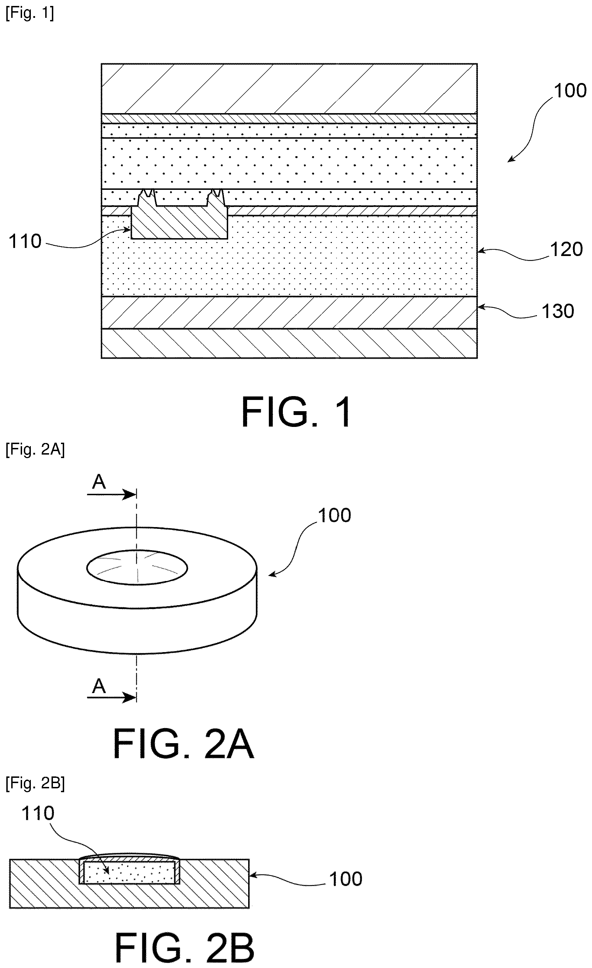

Le dispositif 100 selon la présente invention est représenté Figure 1.

On observe sur la Figure 1 le dispositif 100, comportant une couche faciale, un substrat et une antenne, le complexe 120 de ferrite, ainsi que la couche 130 d'aluminium située sous le complexe 120 de ferrite.

La Figure 2A représente également le dispositif selon l'invention, dans un mode de réalisation.

La Figure 2B est une coupe A-A de la figure 2A.

On observe sur la Figure 2B le tag NFC, la résine d'encapsulation ainsi que la tampographie de finition.

Nous décrivons dans ce qui suit un mode de réalisation particulier de l'invention.

Afin de loger ce tag dans la pièce, une cavité de profondeur comprise entre 0,60 et 0,80 mm a été réalisée dans la pièce métallique lors de la frappe. Le tag étant muni d'une couche fortement adhésive, il est ensuite collé au fond de cette cavité et est ensuite « encapsulé » avec de la résine coulée puis cuite à une température comprise entre 65° C et 95°C pendant une durée comprise entre 45 et 75 minutes. De cette façon, le tag se retrouve sur le produit, et subit une opération de sécurisation contre l'arrachement et la falsification par cet encapsulage. Le tag ne dépasse pas ou très peu de la surface supérieure du produit : sa hauteur logée ne dépasse pas la hauteur du listel (le bord de la pièce frappée dans le cas d'une monnaie) et peut dépasser très légèrement dans le cas d'une médaille qui ne possède pas forcément de listel. L'idée est d'insérer le tag pour venir à fleur de surface une fois monté. La sécurisation est ensuite renforcée par tampographie avec plusieurs couches d'encre de couleurs spécifiques qui sont appliquées sur la résine et qui permettent de certifier l'intégrité d'usine du tag. Cette tampographie est cuite à son tour à une température comprise entre 105° C et 135° C pendant une durée comprise entre 10 et 20 minutes.

Une application mobile spécifique complète cette invention. En effet, tout smartphone muni de la technologie NFC est capable de lire les données infalsifiables (via la blockchain) insérées dans le tag NFC via une application. Cette application fait partie d'un écosystème plus large, complété par une plateforme SaaS software as a service, servant de back office d'administration pour le Demandeur, qui permet de gérer les produits jumeaux numériques avec leur blockchain avec les produits physiques.

La solution offerte par la présente invention est une solution unique dans le monde de la numismatique, voire dans celui des objets connectés, vu la petite taille et les performances du composant intégré dans un environnement exclusivement métallique.

Le tag inventé est une solution unique car il a été miniaturisé (diamètre inférieur à 10-12 mm) et est fonctionnel dans un environnement métallique grâce à son complexe isolant multi-couches, permettant ainsi son intégration dans une pièce de collection ou une médaille. De plus, cette technologie est inviolable par scellement/encapsulage (collage, coulage réticulation de résine et tampographie de finition) dans la pièce.

Les possibilités de stockage d'informations et de contenus liés au produit sont très grandes, voire infinies, le tag et la blockchain servant de clé, et sont accessibles par n'importe quel smartphone équipé de la technologie NFC et d'une application mobile spécifiquement développée. La pièce de collection / médaille peut ainsi donner accès à un :
- Certificat numérique d'authenticité lié au numéro de série, infalsifiable via la blockchain pour contrer toute contrefaçon potentielle ;
- Certificat d'appartenance protégé et infalsifiable via la blockchain (lien de cession en cas de revente entre particuliers) avec possibilité de cession d'appartenance lors d'une vente entre particuliers via un portail / liens sécurisé ;
- Contenu spécifique ou exclusif (vidéos, articles, images, archives, contacts, réductions tarifaires, news...) accessible seulement par le propriétaire du produit pièce de collection / médaille.

## Revendications

1. Dispositif (100) métallique, de type médaille ou pièce de monnaie comportant un élément électronique (110) NFC - Near Field Communication de type tag logé dans une cavité, encapsulé avec de la résine, ledit dispositif (100) métallique étant **caractérisé en ce que** ledit élément électronique (110) NFC - Near Field Communication est intégré dans un complexe (120) de ferrite au sein dudit dispositif (100) métallique, et **en ce que** ledit dispositif (100) métallique comporte en outre une couche (130) d'aluminium située sous le complexe (120) de ferrite.

2. Dispositif (100) métallique selon la revendication 1, **caractérisé en ce que** le complexe (120) de ferrite possède une épaisseur de 2xE, où E est compris entre 80 et 120 µm.

3. Dispositif (100) métallique selon la revendication 1 ou 2, **caractérisé en ce que** la couche (130) d'aluminium possède une épaisseur comprise entre 30 et 60 µm.

4. Dispositif (100) métallique selon la revendication 1, 2 ou 3, **caractérisé en ce que** ladite cavité possède une profondeur comprise entre 0,60 et 0,80 mm.

5. Dispositif (100) métallique selon l'une des revendications précédentes, **caractérisé en ce que** la résine est coulée puis cuite à une température comprise entre 65° C et 95°C pendant une durée comprise entre 45 et 75 minutes.

6. Dispositif (100) métallique selon l'une des revendications précédentes, **caractérisé en ce qu'**une ou plusieurs couches d'encre sont appliquées sur la résine.

7. Dispositif (100) métallique selon l'une des revendications précédentes, **caractérisé en ce qu'**il comporte un certificat numérique intégré dans ledit élément électronique (110) NFC.

8. Dispositif (100) métallique selon la revendication 7, **caractérisé en ce que** ledit certificat numérique est associé à une technologie de blockchain.

9. Dispositif (100) métallique selon l'une des revendications précédentes, **caractérisé en ce qu'**il est couplé à une application mobile installée sur un dispositif de type smartphone.

## Patentansprüche

1. Metallische Vorrichtung (100) vom Typ Medaille oder Münze, die ein elektronisches NFC-Element (110) (NFC - Near Field Communication) vom Typ Tag umfasst, das in einem Hohlraum untergebracht und mit Harz verkapselt ist, wobei die metallische Vorrichtung (100) **dadurch gekennzeichnet ist, dass** das elektronische NFC-Element (110) (NFC - Near Field Communication) in einen Ferritkomplex (120) innerhalb der metallischen Vorrichtung (100) integriert ist und dass die metallische Vorrichtung (100) ferner eine Aluminiumschicht (130) umfasst, die sich unter dem Ferritkomplex (120) befindet.

2. Metallische Vorrichtung (100) nach Anspruch 1, **dadurch gekennzeichnet, dass** der Ferritkomplex (120) eine Dicke von 2xE aufweist, wobei E zwischen 80 und 120 µm liegt.

3. Metallische Vorrichtung (100) nach Anspruch 1 oder 2, **dadurch gekennzeichnet, dass** die Aluminiumschicht (130) eine Dicke zwischen 30 und 60 µm aufweist.

4. Metallische Vorrichtung (100) nach Anspruch 1, 2 oder 3, **dadurch gekennzeichnet, dass** der Hohlraum eine Tiefe zwischen 0,60 und 0,80 mm aufweist.

5. Metallische Vorrichtung (100) nach einem der vorhergehenden Ansprüche, **dadurch gekennzeichnet, dass** das Harz gegossen und anschließend bei einer Temperatur zwischen 65 °C und 95 °C für eine Dauer zwischen 45 und 75 Minuten gebrannt wird.

6. Metallische Vorrichtung (100) nach einem der vorhergehenden Ansprüche, **dadurch gekennzeichnet, dass** eine oder mehrere Tintenschichten auf das Harz aufgetragen werden.

7. Metallische Vorrichtung (100) nach einem der vorhergehenden Ansprüche, **dadurch gekennzeichnet, dass** sie ein in das elektronische NFC-Element (110) integriertes digitales Zertifikat umfasst.

8. Metallische Vorrichtung (100) nach Anspruch 7, **dadurch gekennzeichnet, dass** das digitale Zertifikat mit einer Blockchain-Technologie verbunden ist.

9. Metallische Vorrichtung (100) nach einem der vorhergehenden Ansprüche, **dadurch gekennzeichnet, dass** sie mit einer auf einer Vorrichtung vom Typ Smartphone installierten mobilen Anwendung gekoppelt ist.

## Claims

1. A metal device (100) of the medal or coin type comprising a tag-type NFC - Near Field Communication electronic element (110) housed in a cavity, encapsulated with resin, said metal device (100) being **characterized in that** said NFC - Near Field Communication electronic element (110) is integrated into a ferrite complex (120) within said metal device (100), and **in that** said metal device (100) further comprises an aluminum layer (130) located under the ferrite complex (120).

2. The metal device (100) according to claim 1, **characterized in that** the ferrite complex (120) has a thickness of 2xE, where E is between 80 and 120 µm.

3. The metal device (100) according to claim 1 or 2, **characterized in that** the aluminum layer (130) has a thickness between 30 and 60 µm.

4. The metal device (100) according to claim 1, 2 or 3, **characterized in that** said cavity has a depth between 0.60 and 0.80 mm.

5. The metal device (100) according to one of the preceding claims, **characterized in that** the resin is poured and then cooked at a temperature between 65°C and 95°C for a duration between 45 and 75 minutes.

6. The metal device (100) according to one of the preceding claims, **characterized in that** one or more ink layers are applied to the resin.

7. The metal device (100) according to one of the preceding claims, **characterized in that** it includes a digital certificate integrated into said NFC electronic element (110).

8. The metal device (100) according to claim 7, **characterized in that** said digital certificate is associated with a blockchain technology.

9. The metal device (100) according to one of the preceding claims, **characterized in that** it is coupled to a mobile application installed on a smartphone-type device.
